(19) Europäisches Patentamt
European Patent Office
Office européen des brevets

(11) **EP 1 875 293 B1**

(12) **EUROPÄISCHE PATENTSCHRIFT**

(45) Veröffentlichungstag und Bekanntmachung des Hinweises auf die Patenterteilung:
**15.10.2008 Patentblatt 2008/42**

(21) Anmeldenummer: **06753450.3**

(22) Anmeldetag: **28.04.2006**

(51) Int Cl.:
*G02B 21/00* (2006.01)    *G01N 21/64* (2006.01)

(86) Internationale Anmeldenummer:
**PCT/EP2006/004010**

(87) Internationale Veröffentlichungsnummer:
**WO 2006/114329 (02.11.2006 Gazette 2006/44)**

(54) **HOCHAUFLÖSENDE OPTISCHE MIKROSKOPIE MIT MESSUNG VON TRANSIENTEN DER FLUORESZENZ**

HIGH-RESOLUTION OPTICAL MICROSCOPY FEATURING FLUORESCENCE TRANSIENT MEASUREMENT

MICROSCOPIE OPTIQUE A RESOLUTION ELEVEE COMPRENANT LA MESURE DE PHENOMENES DE FLUORESCENCE TRANSITOIRES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.04.2005 DE 102005020202**

(43) Veröffentlichungstag der Anmeldung:
**09.01.2008 Patentblatt 2008/02**

(73) Patentinhaber: **Picoquant GmbH**
**12489 Berlin (DE)**

(72) Erfinder: **ENDERLEIN, Jörg**
**10961 Berlin (DE)**

(74) Vertreter: **Köllner, Malte**
**Vogelweidstrasse 8**
**60596 Frankfurt am Main (DE)**

(56) Entgegenhaltungen:
**DE-A1- 10 239 028**

• **SCHOENLE A ET AL: "FOUR-DIMENSIONAL MULTIPHOTON MICROSCOPY WITH TIME-CORRELATED SINGLE-PHOTON COUNTING" APPLIED OPTICS, OSA, OPTICAL SOCIETY OF AMERICA, WASHINGTON, DC, US, Bd. 39, Nr. 34, 1. Dezember 2000 (2000-12-01), Seiten 6306-6311, XP001015097 ISSN: 0003-6935**

• **BECKER W ET AL: "High resolution TCSPC lifetime imaging" MULTIPHOTON MICROSCOPY IN THE BIOMEDICAL SCIENCES III 26-28 JAN. 2003 SAN JOSE, CA, USA, Bd. 4963, Nr. 1, Januar 2003 (2003-01), Seiten 175-184, XP002395938 Proceedings of the SPIE - The International Society for Optical Engineering SPIE-Int. Soc. Opt. Eng USA ISSN: 0277-786X**

• **KRÄMER ET AL.: "Fluorescence Lifetime Imaging (FLIM) based analysis of lipid organization in hepatocytes using the MicroTime 200" PICOQUANT APPLICATION NOTE, Februar 2005 (2005-02), XP002395939**

• **SAVITSKY A P ET AL: "Fluorescence enhancement of asCP595 is due to consecutive absorbance of two photons" GENETICALLY ENGINEERED AND OPTICAL PROBES FOR BIOMEDICAL APPLICATIONS II 24-27 JAN. 2004 SAN JOSE, CA, USA, Bd. 5329, Nr. 1, Januar 2004 (2004-01), Seiten 73-78, XP002395940 Proceedings of the SPIE - The International Society for Optical Engineering SPIE-Int. Soc. Opt. Eng USA ISSN: 0277-786X**

• **ENDERLEIN J ET AL: "Fast fitting of multi-exponential decay curves" OPTICS COMMUNICATIONS, NORTH-HOLLAND PUBLISHING CO. AMSTERDAM, NL, Bd. 134, Nr. 1, 15. Januar 1997 (1997-01-15), Seiten 371-378, XP004016148 ISSN: 0030-4018**

- SCHONLE A ET AL: "Far-field fluorescence microscopy with repetitive excitation" European Physical Journal D EDP Sciences; Springer-Verlag France, Bd. 6, Nr. 3, Juni 1999 (1999-06), Seiten 283-290, XP002395941 ISSN: 1434-6060 in der Anmeldung erwähnt

**Beschreibung**

Gebiet der Erfindung

Fluoreszenz-Mikroskopie ist ein nicht mehr wegzudenkender Bestandteil moderner Life-Sciences.

Die wesentliche Beschränkung der Fluoreszenz-Mikroskopie liegt in ihrer begrenzten räumlichen Auflösung, die traditionell mit der Abbe-Grenze angegeben wird und bei ca. 200 nm in lateraler Richtung liegt.

Stand der Technik

Die Verbesserung der räumlichen Auflösung der optischen Mikroskopie ist seit langem das Ziel vieler Arbeiten. Vorgeschlagen wurden u. a. die folgenden Ansätze:

- 4Pi-Mikroskopie [S. W. Hell und H. K. Stelzer, J. Opt. Soc. Am. A 9, 2159 (1992)], bei der mit zwei Objektiven gegenläufige Anregungsstrahlen auf eine Probe fokussiert werden.
- InM-Mikroskopie, bei der mit räumlich modulierter Lichtanregung gearbeitet wird [M.G.L. Gustafsson, J. Microsc. **198,** 82 (2000)] .
- Mehrphotonen-Anregung [W. Denk, J.H. Strickler und W.W. Webb, Science **248,** 73 (1990)].
- RESOLFT, welches nichtlineare Sättigungseffekte nutzt [S.W. Hell, M. Dyba und S. Jakobs, Curr. Opin. Neurobiol. **14,** 1 (2004)].
- STED (*stimulated emission depletion*) [S.W. Hell, in : Topics in Fluorescence Spectroscopy, 5th Edn., Edited by J.R. Lakowicz (Plenum Press, New York, 1997) Seiten 361-422].

Eine Übersicht findet sich in [M.G.L. Gustafsson, Curr. Opin. Struct. Biol. 9, 627 (1999)].

Weiterer Stand der Technik auf dem Gebiet der zeitkorrelierten Fluoreszenzmikroskopie findet sich in:
- SCHÖNLE A ET AL: "FOUR-DIMENSIONAL MULTIPHOTON MICROSCOPY WITH TIME-CORRELATED SINGLE-PHOTON COUNTING", APPLIED OPTICS, OSA, OPTICAL SOCIETY OF AMERICA, WASHINGTON, DC, US, Bd. 39, Nr. 34, 1. Dezember 2000 (2000-12-01), Seiten 6306-6311,
- BECKER W ET AL: "High resolution TCSPC lifetime imaging", MULTIPHOTON MICROSCOPY IN THE BIOMEDICAL SCIENCES III 26-28 JAN. 2003 SAN JOSE, CA, USA, Bd. 4963, Nr. 1, Januar 2003 (2003-01), Seiten 175-184, Proceedings of the SPIE - The International Society for Optical Engineering SPIE-Int. Soc. Opt. Eng USA- SCHÖNLE A ET AL: "Far-field fluorescence microscopy with repetitive excitation", European Physical Journal DEDP Sciences; Springer-Verlag France, Bd. 6, Nr. 3, Juni 1999 (1999-06), Seiten 283-290.

Aufgabe

Aufgabe der Erfindung ist es, die räumliche Auflösung von Mikroskopen weiter zu verbessern.

Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht.

Voraussetzung für die Anwendbarkeit der Erfindung ist, dass das an einem Ort der mikroskopierten Probe generierte Lichtsignal S bei einer Änderung der Anregungsintensität Transienten aufweist, deren zeitlicher Verlauf von der Anregungsintensität abhängt. Für die Erfindung ist es daher wichtig, die Lichtanregung zeitlich zu modulieren.

Betrachten wir kurzzeitig die Verhältnisse an einem gegebenen Ort der mikroskopierten Probe. Die zeitlich modulierte Anregungsintensität $A(t)$ kann dann allgemein geschrieben werden als

$$A(t) = a\alpha(t) ,$$

wobei $t$ die Zeit ist, $\alpha(t)$ die normierte zeitliche Modulation der Anregung und $a$ die Amplitude der Anregung. Das aufgrund der Anregung durch die Probe generierte Signal wird gleichermaßen in normierte zeitliche Modulation und Amplitude unterteilt,

$$S(t) = s\sigma(t).$$

Würde zwischen Anregung und Signal eine strikt lineare Beziehung bestehen,

$$S(t) = cA(t),$$

wobei $c$ eine vom optischen Aufbau sowie von der Probenbeschaffenheit am gegebenen Ort abhängige Konstante ist (Probencharakteristik), z. B. die Konzentration eines Fluoreszenzfarbstoffs, dann wären die Amplituden von Anregung und Signal linear proportional zueinander, $s=ca$, und die normierten Zeitmodulationsfunktionen wären identisch,

$$\sigma(t) = \alpha(t).$$

Somit ließe sich durch die zeitliche Modulation der Anregung aus der Signalamplitude $s$ keinerlei zusätzlicher gesonderter Erkenntnisgewinn über die Funktionen $c$ und a gewinnen. Diese Aussage, dass aus dem Zeitverhalten nichts über die räumliche Struktur der Probe gelernt werden kann, gilt auch für die allgemeinere Beziehung

$$S(t) = c \int_0^\infty dt' f(t') A(t - t')$$

mit $f$ als einer Intensitätsunabhängigen Responsefunktion (z. B. einer Fluoreszenzabklingkurve).

Bei einer allgemeinen nichtlinearen Abhängigkeit jedoch,

$$S(t) = F[c, A(t)],$$

erhält man u. a. die allgemeine Beziehung

$$\sigma(t) = G[c, a, \alpha(t)],$$

so dass die zeitliche (normierte) Modulation des Signals σ eine Funktion auch der Anregungsamplitude $a$ und der Probencharakteristik $c$ wird.

Es lässt sich aus dem Zeitverhalten nichts über die räumliche Struktur der Probe lernen, sofern eine Zerlegung von $G$ in folgende Anteile existiert:

$$G[c, a, \alpha(t)] = f(c, a) + g(c, a) \cdot h(\alpha(t)),$$

Die gewünschte Information lässt sich nur gewinnen, sofern auch $h$ von $a$ abhängt, also keine derartige Zerlegung von $G$ existiert. In den noch zu schildernden bevorzugten Ausführungsbeispielen hat $h$ z. B. die Form:

$$h(\alpha(t)) = h(j(a) \cdot t)$$

*G* hat in diesen Ausführungsbeispielen stets die Form:

$$G[c, a, \alpha(t)] = c \cdot \{f(a) + g(a) \cdot h(j(a) \cdot t)\}$$.

In jedem Verfahren optischer Mikroskopie ist das im Mikroskop durch einen Detektor (Punktdetektor oder Pixel auf einer Kamera, z. B. einer CCD-Kamera) gemessene Signal ein Integral über einen Raumbereich, der mindestens so groß ist wie die durch die Lichtbeugung definierte Auflösungsgrenze des Mikroskops. Dann verallgemeinert sich die letzte Gleichung zu

$$\sigma(t) \propto \int d\mathbf{r} \, U(\mathbf{r}) G\big[c(\mathbf{r}), a(\mathbf{r}), \alpha(t)\big]$$,

wobei *U*(**r**) eine Funktion ist, welche die Detektionseffizienz des Detektors für Licht vom Ort r der Probe beschreibt (z.B. die sog. Point-Spread-Funktion der Optik), und wobei die Integration über das gesamte Volumen der Probe erfolgt. Das fett gedruckte r steht für den dreidimensionalen Ortsvektor.

Kernpunkt der Erfindung ist es, durch Auswertung der zeitlichen Modulation σ(t) des Signals Informationen über die Probencharakteristik *c*(**r**) zu erhalten, mit einer räumlichen Auflösung, die unter der durch die Funktion *U*(**r**) bestimmten beugungsbegrenzten Auflösung liegt.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird das folgende Verfahren vorgeschlagen:

Zum Bestimmen der räumlichen Struktur eines Objekts wird zunächst ein geeignetes Objekt derart ausgewählt, dass es mindestens eine Substanz enthält, die durch elektromagnetische Strahlung zur Emission elektromagnetischer Strahlung angeregt werden kann, wobei die Verteilung dieser Substanz im Objekt nachgewiesen wird.

Die räumliche Struktur eines Objekts, zweidimensional oder dreidimensional, lässt sich durch ein entsprechendes räumlich aufgelöstes Bild von zumindest Teilen der Probe aufklären.

Elektromagnetische Strahlung ist dabei insbesondere Licht, also elektromagnetische Strahlung im sichtbaren Bereich.

Objekte, die durch elektromagnetische Strahlung zur Emission elektromagnetischer Strahlung angeregt werden können sind z. B. solche, die mit einem Farbstoff markiert wurden. Typische Beispiele sind Zellen, in denen gewisse Strukturelemente selektiv durch Farbstoffmarkierung sichtbar gemacht wurden oder von sich aus z.B. fluoreszieren. Dabei kann ein Objekt auch mit mehreren Farbstoffen markiert sein, die mit derselben oder unterschiedlichen Anregungswellenlängen zur Emission angeregt werden können. Ferner gehören dazu selbstleuchtende Substanzen, d. h. solche, die ohne eine zusätzliche Farbstoffmarkierung zur Emission angeregt werden können.

Die Emission elektromagnetischer Strahlung nach elektromagnetischer Anregung umfasst alle Arten der Lichtstreuung durch Moleküle bzw. Objekte, sei sie spontan, wie bei der Raman-Streuung, oder verzögert, wie bei der Fluoreszenz oder Phosphoreszenz, sei sie frequenzverschoben (inelastisch) oder bei der Anregungswellenlänge (elastisch). Im Folgenden wird in der Regel ohne Beschränkung der Allgemeinheit lediglich die bevorzugte Ausführungsform, die Fluoreszenz, näher erläutert.

Ein Anregungsstrahl wird derart in das Objekt eingekoppelt, dass sich eine räumlich inhomogene Verteilung der Anregung im Objekt ergibt. Dies kann z. B. im Fokus eines Strahls mit einer Gauß-Verteilung der Intensitätsverteilung erreicht werden, oder durch eine räumlich modulierte Verteilung der Anregungsintensität, etwa mittels Interferenz. Als Anregungsstrahl wird in der Regel der Strahl eines Lasers verwendet. Dabei kann in vorteilhaften Ausgestaltungen der Erfindung explizit nur ein einziger Strahl ausreichen, was einen optischen Aufbau erfordert, der nicht über das Übliche hinausgeht.

Der Wellenlängenbereich des Anregungsstrahls wird derart gewählt, dass der Anregungsstrahl die Substanz zur Emission anregen kann.

Die Intensität des Anregungsstrahls wird geändert, wodurch sich zeitliche Transienten der Emission elektromagnetischer Strahlung durch die Substanz ergeben. Typischerweise ist der Anregungsstrahl zunächst ausgeschaltet und wird zu einem gegebenen Zeitpunkt möglichst momentan eingeschaltet und für eine gegebene Zeit konstant gelassen. Danach wird der Anregungsstrahl wieder ausgeschaltet und für eine gegebene Zeit ausgeschaltet gelassen, so dass sich ein zeitliches Rechteckmuster ergibt mit Einschaltperioden und Ausschaltperioden. In der Regel wird nach dem plötzlichen Einschalten und während der Einschaltperioden die Emission gemessen. Die Emission zeigt unmittelbar nach dem plötzlichen Einschalten zeitlich verlaufende Transienten bis sich ein Steady-State einstellt, der der zum Beispiel phasenweise konstanten Anregungsleistung entspricht. In einem solchen Beispiel werden die Ein-/Ausschaltperioden des Anregungsstrahls an die Lebensdauer z. B. des Fluoreszenzfarbstoffs angepasst: die Einschaltperiode ist ca. gleich der Fluoreszenzlebensdauer, die Ausschaltperiode ca. 5 bis 10 mal länger, so das vor dem nächsten Einschalten alle Moleküle in den Grundzustand zurückkehren konnten.

Möglich ist jedoch auch eine andere vorgegebene Art der Modulation der Intensität des Anregungsstrahls, der die Emission mit einem gewissen (transienten) Muster folgt, sofern sich aus ihr die im Folgenden geschilderten Schlüsse ziehen lassen. Denkbar ist z. B. eine sinusförmige Modulation der Anregungsintensität.

Die Substanz und der Anregungswellenlängenbereich werden derart aufeinander abgestimmt, dass die zeitlichen Transienten der Emission elektromagnetischer Strahlung nach einer Änderung der Intensität des Anregungsstrahls von der jeweiligen räumlichen Intensität des Anregungsstrahls abhängen.

Eine zeitliche Modulation der Anregungsleistung an jedem Ort der Probe kann auch durch eine zeitlich veränderliche räumliche Modulation der Anregungsintensität erreicht werden, z. B. durch eine in der Zeit erfolgende Relativbewegung von Objekt und Anregungsfokus.

Aus grundsätzlichen physikalischen Gründen heraus, hat ein Anregungsstrahl stets nicht nur eine Wellenlänge, sondern stets eine bestimmte Verteilung von Wellenlängen. Daher wird hier vom Anregungswellenlängenbereich gesprochen. Die Formulierung "Anregungswellenlänge" dient stets nur als abkürzende, vereinfachende Bezeichnung.

Der zeitliche Verlauf der Transienten nach einer Änderung der Intensität des Anregungsstrahls wird gemessen, und zwar vorteilhafterweise beginnend unmittelbar nach der Änderung der Intensität des Anregungsstrahls.

Im Falle einer (kontinuierlichen) Modulation der Intensität des Anregungsstrahls wird die Emission in der Regel kontinuierlich gemessen.

Anschließend werden eben diese Transienten ausgewertet. Dazu werden unterschiedliche Muster für den zeitlichen Verlauf unterschiedlicher Transienten für einzelne Werte der Anregungsintensität bestimmt. Diese Muster werden mittels unterschiedlicher Amplituden an die gemessene Transiente der Emission angepasst, in der Regel durch eine lineare Überlagerung bzw. gewichtete Addition der Muster mit unterschiedlichen, anzupassenden Amplituden.

Die Amplitude desjenigen Musters wird ermittelt, welches der Anregungsleistung in einem räumlichen Bereich von Interesse entspricht. Wird der Anregungsstrahl in einen kleinen Bereich von Interesse fokussiert (Fokus), so ist die Anregungsleistung im Fokus am höchsten und es wird das Muster der Transiente für die höchste relevante Anregungsleistung bestimmt. Das ist typischerweise die schnellste oder langsamste Transiente, je nachdem, wie der zeitliche Verlauf der Transiente von der Anregungsleistung abhängt.

Diese Amplitude entspricht dem Fluoreszenzsignal, das am Ort höchster Anregungsleistung generiert wird, und ist das erfindungsgemäße Bildsignal für einen gegebenen Punkt. Daher wird die solcherart bestimmte Amplitude als Maß für die Konzentration der Substanz in dem räumlichen Bereich von Interesse genommen. Damit ist z. B. ein Bildpunkt bestimmt.

Der Anregungsstrahl wird dann solange räumlich geändert in das Objekt eingekoppelt, bis die räumliche Struktur von zumindest Teilen des Objekts bestimmt ist. Mit anderen Worten, das Objekt wird gescannt. Typischerweise werden dazu das Objekt oder der Fokus versetzt und das Verfahren wiederholt. Es können jedoch auch z. B. die Interferenzstreifen verschoben werden.

Das Verfahren nutzt die Umsetzung zeitlicher Information in räumliche Information. Der so ausgelesene Raumbereich ist wesentlich kleiner als die Ausdehnung der gesamten Anregungsintensitätsverteilung. Das geschilderte Verfahren erreicht eine mindestens vierfach bessere räumliche Auflösung als herkömmliche Mikroskopie, also weit unter der beugungsdefinierten sog. Abbe-Grenze.

Mit dem erfindungsgemäßen Verfahren kann die Abbe-Grenze prinzipiell unterschritten werden. Die involvierten Prinzipien heben die von Abbe (unter bestimmten, nicht mehr gegebenen Annahmen) abgeleitete Grenze auf.

Eine Möglichkeit, die Substanz und den Anregungswellenlängenbereich derart aufeinander abzustimmen, dass die zeitlichen Transienten der Emission elektromagnetischer Strahlung nach einer Änderung der Intensität des Anregungsstrahls von der jeweiligen räumlichen Intensität des Anregungsstrahls abhängen, besteht darin, Triplett-Zustands-Photophysik auszunutzen.

Eine andere Möglichkeit, die Substanz und den Anregungswellenlängenbereich derart aufeinander abzustimmen, dass die zeitlichen Transienten der Emission elektromagnetischer Strahlung nach einer Änderung der Intensität des Anregungsstrahls von der jeweiligen räumlichen Intensität des Anregungsstrahls abhängen, besteht darin, Fluoreszenz einzusetzen unter Ausnutzung der optischen Sättigung des angeregten Zustands.

In diesem Fall ist es messtechnisch vorteilhaft, mit Fluorophoren mit einer langen Fluoreszenz-Lebensdauer zu arbeiten, so dass eine zeitliche Auslesung des Fluoreszenzanstiegs nach Einschalten der Laseranregung leichter möglich ist. Als mögliche Kandidaten kommen fluoreszente Halbleiternanokristalle (sog. Quantendots), Diamant-Farbzentren, oder stabile Farbstoffe mit langer Fluoreszenzlebensdauer wie z. B. Europium oder Ruthenium-basierte Farbstoffe in Frage. Alle diese fluoreszenten Systeme haben Fluoreszenzabklingzeiten von etlichen Dutzend Nanosekunden bis Mikrosekunden.

Bei einem alternativen Lösungsweg werden zwei Strahlen verwendet.

Zum einen ein Anregungsstrahl, der in das Objekt eingekoppelt wird, und zwar nicht zwingend räumlich inhomogen, sondern u. U. auch räumlich homogen.

Zum anderen mindestens ein zweiter Strahl. Dieser wird derart in das Objekt eingekoppelt, dass sich eine räumlich inhomogene Verteilung der Intensität des zweiten Strahls im Objekt ergibt.

Der Wellenlängenbereich des Anregungsstrahls wird derart gewählt, dass der Anregungsstrahl die Substanz zur Emission anregen kann. Der Wellenlängenbereich des zweiten Strahls wird derart gewählt, dass der zweite Strahl die Emission der Substanz beeinflussen kann. Hierfür gibt es verschiedene Möglichkeiten, die in einzelnen Ausführungsbeispielen bzw. Unteransprüche erläutert werden.

Die Intensität des Anregungsstrahls wird geändert, wodurch sich zeitliche Transienten der Emission elektromagnetischer Strahlung durch die Substanz ergeben. Auch hier sind unterschiedliche Varianten vorstellbar. Insbesondere kann der Anregungsstrahl in seiner Intensität derart geändert werden, dass sich Pulse ergeben. Oder er wird zeitlich moduliert, z. B. sinusförmig.

Die Substanz und die Wellenlängenbereiche der Strahlen werden derart aufeinander abgestimmt, dass die zeitlichen Transienten der Emission elektromagnetischer Strahlung durch die Substanz nach einer Änderung der Intensität des Anregungsstrahls von der jeweiligen räumlichen Intensität des zweiten Strahls abhängen.

Danach geht es im Wesentlichen weiter wie im ersten geschilderten Verfahren. Der zeitliche Verlauf der Transienten nach einer Änderung der Intensität des Anregungsstrahls wird gemessen, und zwar vorteilhafterweise beginnend unmittelbar nach der Änderung der Intensität des Anregungsstrahls.

Im Falle einer (kontinuierlichen) Modulation der Intensität des Anregungsstrahls wird die Emission in der Regel kontinuierlich gemessen.

Unterschiedliche Muster für den zeitlichen Verlauf unterschiedlicher Transienten werden bestimmt. Die Muster werden mittels unterschiedlicher Amplituden an die gemessene Transiente der Emission angepasst. Die Amplitude desjenigen Musters wird ermittelt, welches der Intensität des zweiten Strahls in einem räumlichen Bereich von Interesse entspricht. Die solcherart bestimmte Amplitude wird als Maß für die Konzentration der Substanz in dem räumlichen Bereich von Interesse genommen. Schließlich werden die Strahlen solange räumlich geändert in das Objekt eingekoppelt, bis die räumliche Struktur von zumindest Teilen des Objekts bestimmt ist.

Dieses Verfahren kann in einer vorteilhaften Ausgestaltung Förster-Resonanz-Energie-Transfer (FRET) nutzen. Dazu werden als Substanz mindestens ein Paar aus einem Fluorophor (Donor) und einem Quencher (Akzeptor) gewählt, welche Förster-Resonanz-Energie-Transfer (FRET) ausführen. Der Wellenlängenbereich des Anregungsstrahls wird derart gewählt, dass der Anregungsstrahl den Donor zur Emission anregen kann. Der Wellenlängenbereich des zweiten Strahls wird derart gewählt, dass der zweite Strahl den Akzeptor in das Niveau anregen kann, in das der Donor seine Energie abgibt. Dann ist der Akzeptor blockiert und die Abklingzeit verlängert sich entsprechend. Diese Blockade und damit die Abklingzeit sind abhängig von der räumlich inhomogenen Intensität des zweiten Strahls.

Eine weitere Variante besteht darin, stimulierte Emission zu nutzen. Dazu wird der Wellenlängenbereich des zweiten Strahls derart gewählt, dass der zweite Strahl eine stimulierte Emission der Substanz bewirken kann. Diese stimulierte Emission verkürzt die Abklingzeit. Außerdem hängt sie von der räumlich inhomogenen Intensität des zweiten Strahls ab, welche zur Steigerung der Ortsauflösung genutzt werden kann.

Bei diesen beiden varianten wird in der Regel der zweite Strahl mit konstanter Intensität eingestrahlt. Er kann aber auch rechteckförmig moduliert sein, d. h. während der Anregung und der Messperiode eingeschaltet sein, ansonsten nicht. Typischerweise werden jedoch der Anregungsstrahl kurzpulsig und hochrepetitiv und der zweite Strahl kontinuierlich eingestrahlt.

Die Auflösung kann noch weiter gesteigert werden, wenn die geschilderten Verfahren kombiniert werden mit anderen Verfahren zur Steigerung der Auflösung in der Mikroskopie, z. B. wenn die Anregung der Probe mittels elektromagnetischer Strahlung mittels eines 4Pi-Mikroskops erfolgt.

Zur weiteren Verbesserung des Signal-zu-Rauschen-Verhältnisses und damit auch der räumlichen Auflösung kann ein Punkt auch mehrfach angefahren werden, so dass eine Mittelung über viele Zyklen pro Pixel erfolgen kann.

Statt mit nur einem Fokus kann auch mit mehreren Foki gleichzeitig gearbeitet werden, wodurch die Messung parallelisiert und beschleunigt wird.

Ferner wird die Aufgabe gelöst durch ein Computerprogramm, das bei Ablauf auf einer Recheneinheit, einem Mikrocontroller, DSP, FPGA oder Computer oder auf einer Mehrzahl davon in einem Netzwerk die durch eine Recheneinheit ausführbaren Schritte des erfindungsgemäßen Verfahrens in einer seiner Ausgestaltungen ausführt.

Weiterhin wird die Aufgabe gelöst durch ein Computerprogramm mit Programmcode-Mitteln, um die durch eine Recheneinheit ausführbaren Schritte des erfindungsgemäßen Verfahrens in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird. Insbesondere können die Programmcode-Mittel auf einem computerlesbaren Datenträger gespeicherte Instruktionen sein.

Außerdem wird die Aufgabe gelöst durch einen Datenträger, auf dem eine Datenstruktur gespeichert ist, die nach einem Laden in einen Arbeits- und/oder Hauptspeicher einer Recheneinheit, eines Mikrocontrollers, DSPs, FPGAs oder Computers oder einer Mehrzahl davon in einem Netzwerk die durch eine Recheneinheit ausführbaren Schritte des erfindungsgemäßen Verfahrens in einer seiner Ausgestaltungen ausführen kann.

Auch wird die Aufgabe gelöst durch ein Computerprogramm-Produkt mit auf einem maschinenlesbaren Träger gespeicherten Programmcode-Mitteln, um die durch eine Recheneinheit ausführbaren Schritte des erfindungsgemäßen Verfahrens in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Schließlich wird die Aufgabe gelöst durch ein moduliertes Datensignal, welches von einer Recheneinheit, einem Mikrocontroller, DSP, FPGA oder Computer oder von einer Mehrzahl davon in einem Netzwerk ausführbare Instruktionen zum Ausführen der durch eine Recheneinheit ausführbaren Schritte des erfindungsgemäßen Verfahrens in einer seiner Ausgestaltungen enthält.

Als Computersystem kommen sowohl ein Stand-alone Computer oder Mikrocontroller, DSPs oder FPGAs in Betracht, als auch ein Netzwerk von Mikrocontrollern, DSPs, FPGAs oder Rechnern, beispielsweise ein hausinternes, geschlossenes Netz, oder auch Rechner, die über das Internet miteinander verbunden sind. Ferner kann das Computersystem durch eine Client-Server-Konstellation realisiert sein, wobei Teile der Erfindung auf dem Server, andere auf einem Client ablaufen.

Schließlich wird die Aufgabe durch eine Vorrichtung gelöst, die geeignet ist, das geschilderte Verfahren durchzuführen. Diese Vorrichtung enthält:

a) eine elektromagnetische Strahlungsquelle zum Erzeugen eines Anregungsstrahls mit einem vorgegebenen Wellenlängenbereich; hierzu eignen sich besonders Laser, z. B. Halbleiterlaser;
b) Mittel zum Einkoppeln des Anregungsstrahls in das Objekt derart, dass sich eine räumlich inhomogene Verteilung der Anregung im Objekt ergibt;
c) Mittel zum Ändern der Intensität des Anregungsstrahls; hierzu eignen sich Chopper, Modulatoren, z. B. Akusto-Optische-Modulatoren (AOM) oder eine geeignete elektronische Ansteuerung der Strahlungsquelle, insbesondere, wenn diese ein Halbleiterlaser ist;
d) Mittel zum Messen des zeitlichen Verlaufs (Transienten) der Emission elektromagnetischer Strahlung durch das Objekt nach einer Änderung der Intensität des Anregungsstrahls; hierzu eignen sich verschiedene Arten von zeitlich genügend auflösenden Detektoren in Verbindung mit einer geeigneten Elektronik zur Signalverarbeitung; typischerweise erfolgt eine Wandlung der optischen Signale in digitale Abtastwerte; diese werden durch dedizierte oder programmierbare Hardware oder Mikrocontroller oder Computer algorithmisch verarbeitet; bei letzterer kann es sich z. B. um einen DSP (digitalen Signalprozessor) oder ein FPGA handeln, die die Messwerte des Detektors i. d. R. digitalisieren und verarbeiten;
e) Mittel zum Bestimmen unterschiedlicher Muster für den zeitlichen Verlauf unterschiedlicher Transienten für einzelne Werte der Anregungsintensität;
f) Mittel zum Anpassen der Muster mittels unterschiedlicher Amplituden an die gemessene Transiente der Emission; dies erfolgt in der Regel in einer Recheneinheit, die Teil der genannten Elektronik sein kann;
g) Mittel zum Bestimmen der Amplitude desjenigen Musters, welches der Anregungsleistung in einem räumlichen Bereich von Interesse entspricht;
h) Mittel zum Auswählen der solcherart bestimmten Amplitude als Maß für die Konzentration der Substanz in dem räumlichen Bereich von Interesse; und
i) Mittel zum räumlich geänderten Einkoppeln des Anregungsstrahls in das Objekt solange, bis die räumliche Struktur von zumindest Teilen des Objekts bestimmt ist.

Zur Durchführung des Verfahrens, welches zwei Strahlen nutzt, wird eine entsprechende Vorrichtung benötigt. Diese hat eine elektromagnetische Strahlungsquelle zum Erzeugen eines Anregungsstrahls mit einem vorgegebenen Wellenlängenbereich. Ferner eine zweite elektromagnetische Strahlungsquelle zum Erzeugen eines zweiten Strahls mit einem vorgegebenen Wellenlängenbereich. Ferner Mittel zum Einkoppeln des Anregungsstrahls in das Objekt und Mitteln zum Einkoppeln des zweiten Strahls in das Objekt derart, dass sich eine räumlich inhomogene Verteilung des zweiten Strahls im Objekt ergibt.

Benötigt werden auch Mittel zum Ändern der Intensität des Anregungsstrahls sowie Mittel zum Messen des zeitlichen Verlaufs (Transienten) der Emission elektromagnetischer Strahlung durch das Objekt nach einer Änderung der Intensität des Anregungsstrahls und Mittel zum Bestimmen unterschiedlicher Muster für den zeitlichen Verlauf unterschiedlicher Transienten. Hinzu kommen Mittel zum Anpassen der Muster mittels unterschiedlicher Amplituden an die gemessene Transiente der Emission sowie Mittel zum Bestimmen der Amplitude desjenigen Musters, welches der Intensität des zweiten Strahls in einem räumlichen Bereich von Interesse entspricht.

Schließlich weist die Vorrichtung noch Mittel auf zum Auswählen der solcherart bestimmten Amplitude als Maß für die Konzentration der Substanz in dem räumlichen Bereich von Interesse und Mittel zum räumlich geänderten Einkoppeln der Strahlen in das Objekt solange, bis die räumliche Struktur von zumindest Teilen des Objekts bestimmt ist.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1  eine schematische Darstellung des zeitlichen Verlaufs der Anregungsintensität und des Fluoreszenzsignals;
Fig. 2  den zeitlichen Verlauf des Fluoreszenzsignals an verschiedenen Positionen einer Gaußschen Anregungskurve;
Fig. 2A  den zeitlichen Verlauf des räumlichen Fluoreszenzprofils;
Fig. 2B  die zeitliche Fluoreszenzabnahme für verschiedene Positionen außerhalb des Zentrums des Fokus;
Fig. 3  den Verlauf des Signals beim senkrechten Scannen über eine unendlich schmale Linienverteilung eines Fluoreszenzfarbstoffs; und
Fig. 4  die Abhängigkeit der Abklingzeit von der Leistung des zur stimulierten Emission verwendeten Lasers.

Ausführungsbeispiel 1:

Konfokale Fluoreszenzmikroskopie unter Ausnutzung von Triplett-Zustands-Photophysik

Als Mikroskopie-Meßsystem wird ein konfokales Laser-Scanning-Fluoreszenzmikroskop verwendet. Die Anregung erfolgt mit einem beugungsbegrenzt fokussierten Laser.

Die Anregung erfolgt jetzt aber nicht mit konstanter Anregungsleistung, und die Probe wird nicht kontinuierlich gescannt, sondern die Optik wird bei ausgeschaltetem Laser jeweils fest auf einen Punkt der Probe fokussiert, dann der Laser für wenige Mikrosekunden eingeschaltet und wieder abgeschaltet, dann die Optik zum nächsten Punkt in der Probe gefahren und der ganze Prozess wiederholt, bis ein komplettes Bild aufgenommen ist.

Die Ein-/Ausschaltperioden des Anregungslasers sind in diesem Ausführungsbeispiel an die Lebensdauer des Triplett-Zustands angepasst: die Einschaltperiode ist ca. gleich der Triplett-Zustands-Lebensdauer (häufig einige Mikrosekunden), die Ausschaltperiode ca. 5 bis 10 mal länger, so dass beim nächsten Einschalten alle Moleküle in den Grundzustand zurückkehren konnten.

Gemessen wird vorzugsweise das Fluoreszenzsignal, nicht das Phosphoreszenz-Signal. Das detektierte Fluoreszenzsignal wird von jedem angefahrenen Punkt mit hoher zeitlicher Auflösung detektiert, so dass schlussendlich für jeden angefahrenen Bildpunkt der zeitliche Verlauf des Fluoreszenzsignals nach dem jeweiligen plötzlichen Einschalten des Lasers während der Einschaltperiode gemessen ist.

Zwischen zwei Einschaltungsperioden des Anregungslichtes wird im ausgeschalteten Zustand des Lasers so lange gewartet, bis alle fluoreszierenden Moleküle in der Probe wieder in den Grundzustand zurückkehren konnten. Alternativ kann die Probe in großen räumlichen Intervallen gescannt werden (große Punktabstände, bei denen sich die Laserfoki nicht überlappen), und der Scan wird leicht versetzt mehrmals wiederholt, um schließlich die gewünschte räumliche Dichte an gescannten Punkten zu erreichen.

Grundsätzlich sollte bei einer vollständigen Messung der Abstand zwischen einzelnen, angefahrenen Punkten höchstens so groß sein, wie die räumliche Auflösung, die mit dem geschilderten Verfahren erreicht werden kann, z. B. 40 nm. Je nach Anwendung wird man auch deutlich kleinere räumliche Abstände zwischen den einzelnen Punkten des Scans wählen, z. B. 2.5 nm.

Viele Fluoreszenzfarbstoffe zeigen mehr oder weniger ausgeprägte Triplett-Zustands-Photophysik. Dazu betrachte man ein Molekül mit einem Grundzustand $S_0$, einem angeregten Zustand $S_1$ und einem Triplett-Zustand $T_1$. Es wird angenommen, dass die Übergangsrate vom angeregten Zustand zum Grundzustand, das Inverse der Fluoreszenzlebensdauer $\tau$, wesentlich größer ist als die Übergangsrate vom angeregten Zustand in den Triplett-Zustand, welche als Intersystem-Crossing-Rate $k_{isc}$ bezeichnet wird. Die folgenden Gleichungen enthalten entsprechende Vernachlässigungen.

Wird ein fluoreszierendes Molekül mit einer räumlich inhomogenen Intensitätsverteilung beleuchtet, so ergibt sich die ortsabhängige Wahrscheinlichkeit $s(\mathbf{r})$, das Molekül im Grundzustand oder angeregten Zustand zu finden, aus der Lösung der kinematischen Gleichung

$$\frac{ds(\mathbf{r},t)}{dt} = \frac{\tau\, a(\mathbf{r})\, k_{isc}}{1+\tau\, a(\mathbf{r})}\, s(\mathbf{r},t) + k_{ph}\big[1 - s(\mathbf{r},t)\big]$$

wobei $\alpha(\mathbf{r})$ die ortsabhängige Anregungsrate des Moleküls ist, also die Wahrscheinlichkeit, pro Zeiteinheit vom Grundzustand in den angeregten Zustand überzugehen. $\alpha(\mathbf{r})$ ist gegeben durch

$$a(\mathbf{r}) = \frac{I(\mathbf{r})\sigma}{h\nu_{ex}}$$

wobei $\sigma$ hier der Absorptionswirkungsquerschnitt des Moleküls bei der Anregungswellenlänge $\nu_{ex}$ ist, welcher mit dem Extinktionskoeffizienten durch die Beziehung

$$\sigma\big[\mathrm{cm}^2\big] = 10^3 \ln 10\,\varepsilon\big[\mathrm{l\times cm^{-1}\times mol^{-1}}\big]\big/N_A$$

verknüpft ist, wobei $N_A$ die Avogadrokonstante ist. $h$ ist die Plancksche Konstante und $I(\mathbf{r})$ ist die ortsabhängige Intensität des Anregungsstrahls bei der Anregungswellenlänge. $k_{ph}$ ist die inverse Lebensdauer des Triplett-Zustands, also die Phosphoreszenzrate.

Wird das anregende Laserlicht zum Zeitpunkt $t=0$ plötzlich eingeschaltet, und sind alle Moleküle zu diesem Zeitpunkt im Grundzustand, ist also $s(\mathbf{r},t=0)=1$, so ist die explizite Lösung dieser Gleichung gegeben durch:

$$s(\mathbf{r},t) = \frac{k_{ph}}{k_{ph}+\tau k_{isc} f(\mathbf{r})} + \frac{\tau k_{isc} f(\mathbf{r})}{k_{ph}+\tau k_{isc} f(\mathbf{r})} \exp\Big\{-\big[k_{ph}+\tau k_{isc} f(\mathbf{r})\big]t\Big\}$$

Dabei steht $f(\mathbf{r})$ für

$$f(\mathbf{r}) = \frac{a(\mathbf{r})}{1+\tau a(\mathbf{r})}$$

Die abgeleitete Gleichung bezieht sich auf eine Zeitskala, nach der das sog. Antibunching, also das schnelle Ansteigen der Fluoreszenz nach Einschalten des Lasers, abgeklungen ist, was ca. genauso lange dauert wie die Fluoreszenzabklingzeit, als ca. 1-10 ns. Das heißt, die obige Gleichung gilt für Zeiten jenseits der Fluoreszenzabklingzeit nach dem plötzlichen Einschalten.

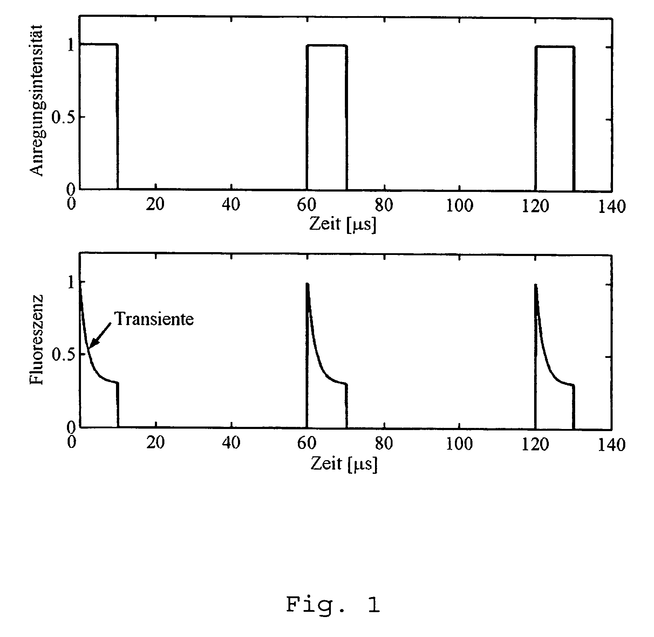

Ein Beispiel der plötzlich eingeschalteten Anregungsintensität und des daraus resultierenden Fluoreszenzsignals zeigt Fig. 1.

Dann ist, nach Einschalten des Lasers, das messbare Fluoreszenzsignal von einem Punkt gegeben durch

$$S(\mathbf{r},t) = \int d\mathbf{r}'\, U(\mathbf{r}-\mathbf{r}')\left\{\frac{c(\mathbf{r}')k_{ph}}{k_{ph}+\tau k_{isc} f(\mathbf{r}')} + \frac{c(\mathbf{r}')\tau k_{isc} f(\mathbf{r}')}{k_{ph}+\tau k_{isc} f(\mathbf{r}')}\exp\Big\{-\big[k_{ph}+\tau k_{isc} f(\mathbf{r}')\big]t\Big\}\right\},$$

mit folgenden Abkürzungen: $U(\mathbf{r}-\mathbf{r}')$ die Point-Spread-Funktion (PSF) des Mikroskops, $c(\mathbf{r})$ die Konzentrationsverteilung des Fluoreszenzfarbstoffs in der Probe.

Der erste, zeitlich konstante, Teil des Signals,

$$S_0(\mathbf{r}) = \int d\mathbf{r}' U(\mathbf{r} - \mathbf{r}') \frac{c(\mathbf{r}') k_{ph}}{k_{ph} + \tau k_{isc} f(\mathbf{r}')}$$

ist das, was herkömmliche Mikroskopie mit zeitlich konstanter Anregung als Nutzsignal misst und auswertet. Herkömmliche Mikroskopie kann dann durch Verwendung der genauen Kenntnis der PSF und der Anregungsintensitätsverteilung, d. h. $\alpha(\mathbf{r})$, versuchen, über Entfaltung eine bessere Kenntnis der unbekannten Funktion $c(\mathbf{r})$ zu erhalten. Allerdings wird limitierend immer die beugungsbedingt endliche Ausdehnung der Anregung $\alpha(\mathbf{r})$ sein.

Bei dem vorgeschlagenen Verfahren wird eine räumlich besser aufgelöste Kenntnis der Funktion $c(\mathbf{r})$ durch die Auswertung der zeitlichen Änderung des Signals der Transiente, d. h. durch die Auswertung des zeitlichen Anteils

$$S_1(\mathbf{r},t) = \int d\mathbf{r}' U(\mathbf{r} - \mathbf{r}') \frac{c(\mathbf{r}') \tau k_{isc} f(\mathbf{r}')}{k_{ph} + \tau k_{isc} f(\mathbf{r}')} \exp\left\{-\left[k_{ph} + \tau k_{isc} f(\mathbf{r}')\right]t\right\},$$

des Signals gewonnen. Wie aus der letzten Gleichung direkt ersichtlich, ist das zeitlich abhängige Fluoreszenzsignal eine Überlagerung von exponentiellen Zerfällen, wobei die Rate des exponentiellen Zerfalls eine direkte Funktion der Anregungsintensität ist, nämlich $k_{ph} + \tau k_{isc} f(\mathbf{r})$.

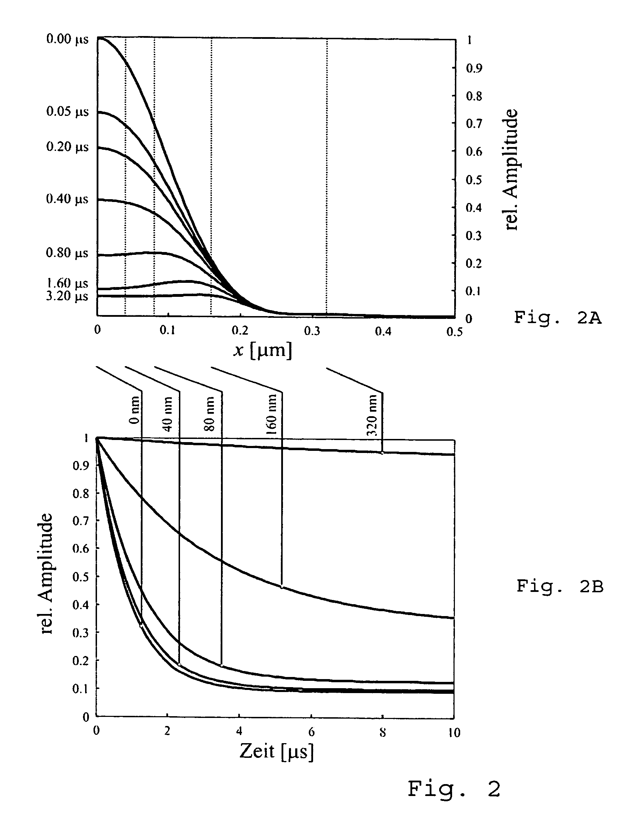

Diesen Zusammenhang zeigt Fig. 2, welche den zeitlichen Verlauf des Fluoreszenzsignals an verschiedenen Positionen einer Gaußschen Anregungskurve zeigt.

Fig. 2A zeigt den zeitlichen Verlauf des räumlichen Fluoreszenzprofils bei Gauß-förmiger Laseranregung eines homogen verteilten Fluorophors. Die verwendeten photophysikalischen Parameter sind: Fluoreszenzlebensdauer 1 ns, Triplett-Zustands-Lebensdauer 10 $\mu$s, Intersystem-Crossing-Rate 10^8/s. Als Farbstoff wurde Acridinorange gewählt, mit einer Anregungswellenlänge von 470 nm und einer Emissionswellenlänge von 530 nm. Die Leistung des Lasers während der Einschaltperiode betrug 50 $\mu$W. Die Fokussierung erfolgte beugungsbegrenzt durch ein Öl-Immersions-Objektiv mit einer numerischen Apertur von 1.4. Die Berechnung der Verteilung der Anregungsleistung im Fokus erfolgte gemäß [B. Richards und E. Wolf, Proc. Roy. Soc. London A 253, 358 (1959)]. Der Fokusdurchmesser im Zentrum betrug ca. 180 nm. Die Leistungsdichte oder Intensität im Fokus betrug somit 51 kW/cm^2. Der Absorptionswirkungsquerschnitt beträgt 2·10^-16 cm^2 bei der Anregungswellenlänge. Damit ergibt sich eine maximale Anregungsrate a im Zentrum von 10 MHz.

Fig. 2B zeigt die zeitliche Fluoreszenzabnahme für verschiedene Positionen außerhalb des Zentrums des Fokus, wie angezeigt. Je höher die Anregungsintensität, umso schneller werden die Moleküle in den Triplett-Zustand gepumpt und umso schneller fällt das Fluoreszenzsignal auf sein Steady-State-Niveau zurück.

Die gemessene Emission ist die Emission aus dem Singulett-Zustand heraus, d. h. die Fluoreszenz. Sie kann selektiv durch eine Filterung der Wellenlängen des emittierten Lichts detektiert werden. Dazu werden typischerweise geeignete dielektrische Bandpassfilter verwendet. Typische Wellenlängen für Fluoreszenz-Signale von Farbstoffen sind um ca. 20 bis 100 nm gegenüber der Anregungswellenlänge rotverschoben.

Mit dem zeitlichen Verlauf des gemessenen Fluoreszenzzerfalls eines jeden Punktes wird ein multiexponentieller Fit durchgeführt und die Amplitude der schnellsten Komponente bestimmt. Diese Amplitude entspricht dem Fluoreszenzsignal, das am Ort höchster Anregungsleistung generiert wird, und ist das erfindungsgemäße Bildsignal für einen gegebenen Punkt.

Dadurch gelingt die Umsetzung zeitlicher Information in räumliche Information.

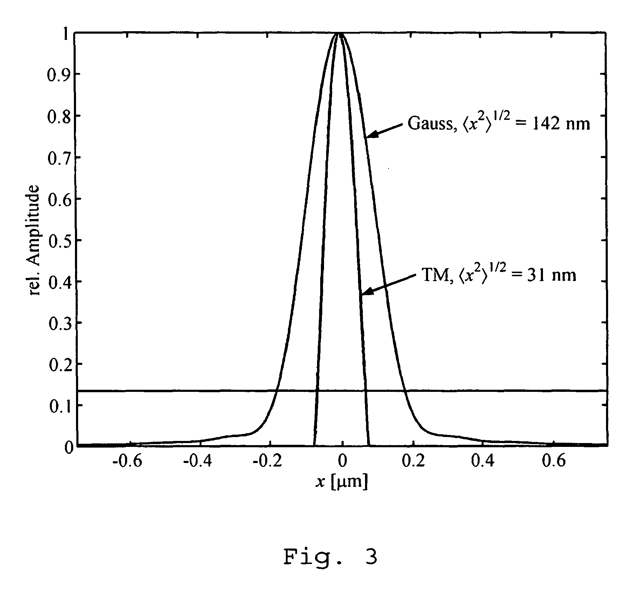

Der so ausgelesene Raumbereich ist wesentlich kleiner als die Ausdehnung der gesamten Anregungsintensitätsverteilung. Dies demonstriert für einen eindimensionalen Scan Fig. 3, wobei der Verlauf des Signals beim senkrechten Scannen über eine unendlich schmale Linienverteilung eines Fluoreszenzfarbstoffs gezeigt ist. In Fig. 3 ist ein Vergleich der räumlichen Auflösung des vorgeschlagenen Verfahrens und der Steady-State-Fluoreszenzintensität beim senkrechten Scannen einer Gaußförmigen Anregung über eine unendlich schmale Linie eines fluoreszierenden Stoffes gezeigt. Die breitere Kurve entspricht direkt dem Gaußprofil der Anregung und bestimmt das räumliche Auflösungsvermögen herkömmlicher Mikroskopie. Die schmale Kurve entspricht dem Profil des hier geschilderten bildgebenden Signals, der Amplitude der schnellsten gefitteten Komponente. Gezeigt sind auch die 1/e^2-Breiten der Verteilungen (waagerechte Linie bei einer relativen Amplitude von 1/e^2 = 0,13).

In diesem Beispiel wurde angenommen, dass der Laser je Pixel für 3.2 $\mu$s angeschaltet ist. Nach dem Einschalten wurde der Laser während der zehnfachen Einschaltperiode ausgeschaltet, also für 32 $\mu$s.

Die Fluoreszenzintensität wurde in sechs unterschiedlich breiten Zeitfenstern gemessen. Die Zeitintervalle lagen logarithmisch gestaffelt zwischen den Zeiten 0, 0.05, 0.1, 0.2, 0.4, 0.8, 1.6 und 3.2 $\mu$s. Die Zeitintervalle wurden entsprechend gewählt, um die Datenmenge zu reduzieren, ohne entscheidende Informationen zu verlieren.

Der zeitliche Verlauf der pro Pixel gemessenen Intensität wurde durch einen biexponentiellen Zerfall mit den Zerfallsdauern 0.75 und 1.5 μs gefittet. Das bildgebende Signal ist die Amplitude der schnellen Komponente (0.75 μs).

In Fig. 3 erkennt man, dass das geschilderte Verfahren (Linie mit der Bezeichnung "TM", TM steht für Transienten-Mikroskopie) eine ca. fünffach bessere räumliche Auflösung erreicht als herkömmliche Mikroskopie (Linie mit der Bezeichnung "Gauss"), also weit unter der beugungsdefinierten sog. Abbe-Grenze. Dazu sind in Fig. 3 bei den jeweiligen Kurven auch die Intensitätsverteilungsbreiten und die Wurzel des mit der Intensitätsverteilung gewichteten Mittelwerts des Positionsquadrats $x^2$ angegeben.

Ausführungsbeispiel 2:

Konfokale Fluoreszenzmikroskopie unter Ausnutzung optischer Sättigung des angeregten Zustands

Das Meßsystem ist identisch mit dem im ersten Ausführungsbeispiel beschriebenen. Allerdings sind die Ein-/ Ausschaltperioden des Anregungslasers jetzt an die Lebensdauer des Fluoreszenzfarbstoffs angepasst: die Einschaltperiode ist ca. gleich der Fluoreszenzlebensdauer, die Ausschaltperiode ca. 5 bis 10 mal länger, so dass vor dem nächsten Einschalten praktisch alle Moleküle in den Grundzustand zurückkehren konnten.

Die Anregungsleistung sollte hinreichend groß sein, so dass im Anregungsmaximum merkliche optische Sättigung des angeregten Zustands erfolgt bzw. eine merkliche Entvölkerung des Grundzustands. Dann ist das messbare Fluoreszenzsignal unmittelbar nach dem Einschalten des Anregungslichts und während der Dauer desselben gegeben durch:

$$S(\mathbf{r},t) = \int d\mathbf{r}' U(\mathbf{r}-\mathbf{r}') c(\mathbf{r}') f(\mathbf{r}') \left\{ 1 - \exp\left\{ -\left[ \tau^{-1} + f(\mathbf{r}') \right] t \right\} \right\}$$

mit den gleichen Abkürzungen wie im ersten Ausführungsbeispiel. Man erkennt, dass sich umso schneller ein Steady-State der Fluoreszenz einstellt je stärker die Anregungsintensität ist. Im Steady-State kehren zu jeder Zeit genauso viele Moleküle in den Grundzustand zurück wie Moleküle in den angeregten Zustand gepumpt werden. Nur ganz am Anfang der Einschaltperiode sind alle Moleküle im Grundzustand.

Wiederum besteht das Signal aus einem zeitlich konstanten Term und einem, diesmal ansteigenden, zeitlich abhängigen Term, jetzt aber auf der Zeitskala der Fluoreszenzlebensdauer. Der zeitlich abhängige Term ist wieder die Überlagerung exponentieller Funktionen, mit der exponentiellen Rate abhängig von der Anregungsintensität. Er kann analog zum ersten Ausführungsbeispiel ausgewertet und zur Verbesserung der räumlichen Auflösung verwendet werden.

Ausführungsbeispiel 3:

Konfokale Fluoreszenzmikroskopie mit Zweifarbenanregung unter Ausnutzung von Förster-Resonanz-Energie-Transfer

Das Meßsystem ist identisch mit dem im ersten Ausführungsbeispiel beschriebenen, allerdings erfolgt die Anregung jetzt mit zwei Lasern auf zwei verschiedenen Wellenlängen. Als Signalgeber werden gekoppelte Paare von Farbstoffen oder anderen fluoreszierenden Substanzen (Fluorophoren) verwendet, welche effizient Förster-Resonanz-Energie-Transfer (FRET) zwischen einem Donor und einem Akzeptor ausführen.

Die beiden Anregungswellenlängen regen effizient den Donor und den Akzeptor des FRET-Paares an. Die Akzeptoranregung kann zeitlich kontinuierlich erfolgen. Der Akzeptor wird durch die Anregung in eben den Zustand gebracht, der die Energie des Donors aufnehmen könnte. Nach der Anregung des Akzeptors ist dies jedoch nicht mehr möglich, der potentiell aufnehmende Zustand ist besetzt, der Akzeptor ist blockiert. Die Donoranregung erfolgt wieder diskontinuierlich, wie in den vorangehenden Ausführungsbeispielen.

Gemessen wird nur die Donorfluoreszenz, der Akzeptor kann ein nichtfluoreszenter Quencher sein. Das durch die Akzeptoranregung erzeugte Profil *nichtangeregter* Akzeptormoleküle sei mit $b(\mathbf{r})$ bezeichnet. $b(\mathbf{r})$ bezeichnet dabei die Wahrscheinlichkeit, dass ein Akzeptormolekül am Ort $\mathbf{r}$ nicht angeregt ist. $b(\mathbf{r})$ ist eine Zahl zwischen 0 und 1. $k_F$ bezeichnet die FRET-Rate und hat die Einheit 1/s. Es ist angenommen, dass die FRET-Paare chemisch gekoppelt sind, also ein Akzeptor immer an einem Donor hängt, im Verhältnis 1:1, und zwar in gemittelt gleicher Anordnung, so dass die FRET-Rate im Mittel für alle FRET-Paare die gleiche ist. Dann ist das messbare Signal nach wiederum stufenförmigem Einschalten des Lasers für die Donoranregung gegeben durch

$$S(\mathbf{r},t) \approx \int d\mathbf{r}' U(\mathbf{r}-\mathbf{r}') \frac{c(\mathbf{r}')a(\mathbf{r}')\left\{1-\exp\left[-\left(a(\mathbf{r}')+k_F b(\mathbf{r}')+\tau^{-1}\right)t\right]\right\}}{1+\tau\left[a(\mathbf{r}')+k_F b(\mathbf{r}')\right]}$$

Anschaulich gesprochen, startet man mit allen Donormolekülen im Grundzustand. Je mehr anregbare Akzeptormoleküle da sind, die Energie vom Donor akzeptieren können, umso schneller kann der Donor wieder abgeregt werden. Die Physik ist vollkommen identisch mit dem vorherigen Ausführungsbeispiel, nur dass zur strahlenden Abregung des Donors jetzt noch die Abregung via FRET zum Akzeptor dazukommt.

Der Vorteil ist, dass man einen messbaren Effekt auch dann bekommt, wenn die Anregung a($\mathbf{r}$) noch sehr klein ist, so dass noch keine merkliche Entvölkerung des Grundzustands (*Ground State Depletion*) des Donors wie im vorherigen Ausführungsbeispiel zu beobachten ist. Die Anregungs- bzw. Ortsabhängigkeit wird durch die Entvölkerung des Grundzustands des Akzeptors erreicht.

Im Gegensatz zum zweiten Ausführungsbeispiel kann hier die Anregung des Donors weit unter der optischen Sättigungsintensität erfolgen, $\alpha(\mathbf{r}) \ll \tau^{-1}$. Die FRET-Rate $k_F$ sollte hinreichend groß sein, und der Akzeptor sollte durch den zweiten Laser hinreichend stark in den Zustand gepumpt werden, in dem er keine Energie vom Donor akzeptieren kann. Dieses Vorgehen sollte besonders gut mit langlebigen Akzeptoren funktionieren, bei denen sich der angeregte Zustand gut bevölkern lässt.

Das erfindungsgemäß auswertbare Signal, der zeitliche Verlauf der Fluoreszenz, wird dann (bei Vernachlässigung von $\alpha(\mathbf{r})$) durch die räumlich abhängige Rate $\tau^{-1}+k_F b(\mathbf{r})$ bestimmt, also auf der Zeitskala der der Fluoreszenzlebensdauer. $b(\mathbf{r})$, das Wahrscheinlichkeitsprofil *nichtangeregter* Akzeptormoleküle, ist im Fokus des Laserstrahls für die Akzeptoranregung am kleinsten, so dass die längste Donor-Fluoreszenzlebensdauer dem Ort höchster Akzeptoranregung (geringste Wahrscheinlichkeit $b(\mathbf{r})$ *nichtangeregter* Akzeptoren) entspricht und umgekehrt.

Das vorgeschlagene Verfahren besteht jetzt im Fitten der Fluoreszenzlebensdauer der gemessenen Donorfluoreszenz in jedem Punkt durch einen multiexponentiellen Fit. Das bildgebende Signal ist dann die Amplitude der Komponente mit der längsten Lebensdauer. In diesem Ausführungsbeispiel wird die räumliche Auflösung durch das räumliche Profil der Akzeptoranregung dominiert aber nicht begrenzt oder bestimmt. Die Grenze der räumlichen Auflösung ist ein Bruchteil der räumlichen Auflösung der Akzeptoranregung.

Ausführungsbeispiel 4:

Konfokale Fluoreszenzmikroskopie mit Zweifarbenanregung unter Ausnutzung von stimulierter Emission

Das Meßsystem ist identisch mit dem im ersten Ausführungsbeispiel beschriebenen, allerdings erfolgt die Anregung jetzt mit zwei Lasern auf zwei verschiedenen Wellenlängen. Die erste Wellenlänge wird zur effizienten Fluoreszenzanregung einer fluoreszierenden Substanz (Fluorophor), die zweite zur Anregung der stimulierten Emission derselben Substanz benutzt. Dabei wird das Licht beider Wellenlängen mit maximalem räumlichen Überlapp in die Probe fokussiert, z. B. indem das Licht beider Wellenlängen durch die gleiche Einzelmoden-Lichtleitfaser zum Objektiv geleitet, durch dieselbe Linse kollimiert und dann durch dasselbe Objektiv in die Probe fokussiert wird. Des Weiteren erfolgt die Fluoreszenzanregung kurzpulsig mit hoher Wiederholrate, so dass die Pulslängen deutlich kleiner als die charakteristische Fluoreszenzabklingzeit der angeregten Substanz und der Abstand zwischen Pulsen deutlich länger als diese Fluoreszenzabklingzeit sind. Die Anregung auf der Wellenlänge der stimulierten Emission erfolgt kontinuierlich, also mit konstanter Intensität.

Alternativ kann die Fluoreszenzanregung mit einem modulierten Signal erfolgen (mit typischen Modulationsfrequenzen im Bereich MHz bis GHz) und die Detektion der Fluoreszenz mit einer phasensensitiven Elektronik, welche die Phasenverschiebung und den Modulationsgrad der Fluoreszenz-Emission zur Bestimmung der Abklingzeit ermittelt.

Gemessen wird das schnelle Abklingen der Fluoreszenzintensität nach jedem Fluoreszenzanregungspuls, typischerweise im so genannten Einzelphotonen-Zählmodus [siehe z. B. WO 98/23941 A2], indem hinreichend schnelle einzelphotonenempfindliche photoelektrische Detektoren und Detektionselektroniken verwendet werden. Dann ist das messbare Signal nach einem Fluoreszenzanregungspuls gegeben durch

$$S(\mathbf{r},t) \approx \int d\mathbf{r}' U(\mathbf{r}-\mathbf{r}') c(\mathbf{r}') \sigma_{01} T_{pulse} I_{ex}(\mathbf{r}') \exp\left\{-\left[\frac{1}{\tau}+\sigma_{SE} I_{SE}(\mathbf{r}')\right]t\right\}$$

wobei $\sigma_{01}$ der Absorptionswirkungsquerschnitt bei der Anregungswellenlänge ist; $\sigma_{SE}$ ist der Wirkungsquerschnitt der stimulierten Emission bei der zur stimulierten Emission benutzten Wellenlänge; $\tau$ ist die der Substanz intrinsische, angenommenermaßen monoexponentielle Fluoreszenzabklingzeit; $T_{pulse} \ll \tau$ ist die Länge der zur Fluoreszenzanregung benutzten Lichtpulse; und $I_{ex}(\mathbf{r})$ und $I_{SE}(\mathbf{r})$ sind die möglichst identischen räumlichen Intensitätsprofile des zur Fluoreszenzanregung und zur stimulierten Emission genutzten Lichtes (in Photonen pro Zeit pro Fläche). Alle anderen Größen haben dieselbe Bedeutung wie im Ausführungsbeispiel 1.

Wie im Ausführungsbeispiel 1 wird wiederum eine räumlich besser aufgelöste Kenntnis der Funktion $c(\mathbf{r})$ durch die Auswertung der zeitlichen Änderung des Signals der Transiente erreicht, d. h. durch die Auswertung des zeitlichen Anteils von $S(\mathbf{r},t)$, jetzt wieder auf der Zeitskala der Fluoreszenzlebensdauer. Wie aus der letzten Gleichung direkt ersichtlich, ist das zeitlich abhängige Fluoreszenzsignal eine Überlagerung von exponentiellen Zerfällen, wobei die Rate des exponentiellen Zerfalls eine direkte Funktion der Intensität des zur stimulierten Emission verwendeten Lichts ist, nämlich $\tau^{-1} + \sigma_{SE} I_{SE}(\mathbf{r}')$ .

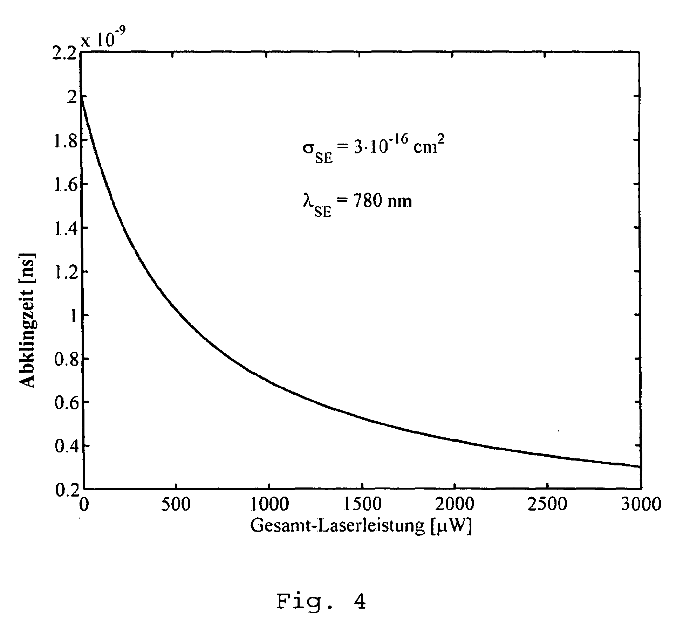

Diesen Zusammenhang zeigt Fig. 4, welche die Abklingzeit in Abhängigkeit von der Leistung des zur stimulierten Emission verwendeten fokussierten Lasers zeigt. Angenommen wurde eine intrinsische Fluoreszenzlebensdauer des verwendeten Fluorophors von 2 ns, eine Fokussierung des zur stimulierten Emission verwendeten Lasers auf einen Fokusdurchmesser von 400 nm bei 780 nm Wellenlänge, und ein Wirkungsquerschnitt der stimulierten Emission von $3 \cdot 10^{-16}$ cm^2.

Das vorgeschlagene Verfahren besteht jetzt im Fitten der Fluoreszenzlebensdauer in jedem Punkt durch einen multiexponentiellen Fit. Das bildgebende Signal ist dann die Amplitude (normiert oder absolut) der Komponente mit der kürzesten Lebensdauer. In diesem Ausführungsbeispiel wird die räumliche Auflösung durch das räumliche Profil des zur stimulierten Emission verwendeten Lichts dominiert. Die Grenze der räumlichen Auflösung ist ein Bruchteil der räumlichen Auflösung des zur stimulierten Emission verwendeten Lichts.

Auch in der Schrift [Schönle, A., Hell, S.W.: "Far-field fluorescence microscopy with repetitive excitation"; Eur. Phys. J. D, Vol. 6, Seiten 283-290 (1999)] ist ein Verfahren zur Verbesserung der räumlichen Auflösung bei der Fernfeld-Mikroskopie vorgeschlagen, bei dem mit zwei unterschiedlichen Lasern angeregt wird. Dabei strahlt ein Anregungslaser gepulst ein, während ein zweiter Laser erst nach dem Puls des Anregungslasers einsetzt und für eine vorgegeben kurze Weile strahlt, um die Moleküle in ein höheres Niveau zu pumpen, wodurch die Abklingzeit verlängert wird. Dieser Effekt ist abhängig von der räumlichen Intensität des zweiten Lasers und lässt sich zur Verbesserung der räumlichen Auflösung bei der Fernfeld-Mikroskopie verwenden. Gemessen wird die Emission erst nach Abschalten auch des zweiten Lasers. Erkauft wird die höhere räumliche Auflösung daher durch einen drastischen Signalverlust. Stimulierte Emission spielt bei diesem Verfahren explizit nur eine vernachlässigbare Rolle. Außerdem wird ein völlig anderer spektroskopischer Mechanismus unter Einbeziehung anderer energetischer Niveaus der Substanz genutzt.

Ausführungsbeispiel 5:

4Pi-Mikroskopie

Das messtechnische System für dieses Ausführungsbeispiel ist ein 4Pi-Mikroskop [S. W. Hell und H. K. Stelzer, J. Opt. Soc. Am. A 9, 2159 (1992)] wie in der Literatur ausführlich beschrieben. Anregung, Detektion und Signalauswertung erfolgt analog zu den ersten vier Ausführungsbeispielen. Wesentlich ist hier, dass durch die erfindungsgemäße Auswertung des zeitlichen Verlaufs der gemessenen Fluoreszenz auf das erfindungsgemäße bildgebende Signal hin nur Raumbereiche erfasst werden, in denen die Anregungsintensität über einem gewissen Grenzwert liegt, realistischerweise bei über 80% der maximalen Anregungsintensität im Fokuszentrum. Damit hat das Fluoreszenzsignal, welches in den bekannten Nebenmaxima der Anregung eines 4Pi-Mikroskops entsteht, keinen Einfluss auf das erfindungsgemäß bildgebende Signal.

Ausführungsbeispiel 6:

Weitfeld- Fluoreszenzmikroskopie mit räumlich modulierter Anregung

In diesem Ausführungsbeispiel erfolgt die Fluoreszenzanregung großflächig aber räumlich moduliert (z. B. durch Erzeugen eines Gitters auf der Probe), und die Detektion erfolgt mit einer Kamera, welche die Verfolgung zeitlich schneller Prozesse zulässt, z. B. mit einer gate-baren CCD-Kamera im Boxcar-Verfahren. Die Fluoreszenzanregung wird wiederum stufenförmig für kurze Zeit eingeschaltet und wieder abgeschaltet. Wenn die Detektion im Boxcar-Verfahren erfolgt, wird bei jedem Einschalten mit der Kamera ein anderes Zeitfenster des Fluoreszenzabfalls (oder -anstiegs, wie im zweiten Ausführungsbeispiel) gemessen. Analog wie in den ersten vier Ausführungsbeispielen wird das Signal dann pixelweise ausgewertet. Durch Verschiebung oder Drehung der räumlichen Modulation der Anregung kann die räumliche Auflösung weiter verbessert werden.

**EP 1 875 293 B1**

Liste der zitierten Literatur:

S.W. Hell und H.K. Stelzer, J. Opt. Soc. Am. A 9, 2159 (1992)

M.G.L. Gustafsson, J. Microsc. 198, 82 (2000)

W. Denk, J.H. Strickler und W.W. Webb, Science 248, 73 (1990)

S.W. Hell, M. Dyba und S. Jakobs, Curr. Opin. Neurobiol. 14, 1 (2004)

S.W. Hell, in: Topics in Fluorescence Spectroscopy, 5th Edn., Edited by J.R. Lakowicz (Plenum Press, New York, 1997) Seiten 361-422

M.G.L. Gustafsson, Curr. Opin. Struct. Biol. 9, 627 (1999)

B. Richards und E. Wolf, Proc. Roy. Soc. London A 253, 358 (1959)

WO 98/23941 A2

A. Schönle, S.W. Hell: "Far-field fluorescence microscopy with repetitive excitation"; Eur. Phys. J. D, Vol. 6, Seiten 283-290 (1999)

**Patentansprüche**

1. Verfahren zum Bestimmen der räumlichen Struktur eines Objekts mittels Fluoreszenzmikroskopie mit folgenden Schritten:

   a) das Objekt wird derart ausgewählt, dass es mindestens eine geeignete Substanz enthält, die durch elektromagnetische Strahlung zur Emission elektromagnetischer Strahlung angeregt werden kann, wobei die Verteilung dieser Substanz im Objekt nachgewiesen wird;
   b) ein Anregungsstrahl wird derart in das Objekt eingekoppelt, dass sich räumliche Bereiche mit unterschiedlichen Anregungsintensitäten im Objekt ergeben;
   c) der Wellenlängenbereich des Anregungsstrahls wird derart gewählt, dass der Anregungsstrahl die Substanz zur Emission anregen kann;
   d) die Intensität des Anregungsstrahls wird geändert, wodurch sich zeitliche Transienten der Emission elektromagnetischer Strahlung durch die Substanz ergeben;
   e) die Substanz und der Anregungswellenlängenbereich werden derart aufeinander abgestimmt, dass die zeitlichen Transienten der Emission elektromagnetischer Strahlung nach einer Änderung der Intensität des Anregungsstrahls von der jeweiligen Intensität des Anregungsstrahls abhängen;
   f) der zeitliche Verlauf der Transienten nach einer Änderung der Intensität des Anregungsstrahls wird gemessen;
   g) unterschiedliche Muster für den zeitlichen Verlauf unterschiedlicher Transienten für einzelne Werte der Anregungsintensität werden bestimmt;
   h) die Muster werden mittels unterschiedlicher Amplituden an die gemessene Transiente der Emission angepasst;
   i) die Amplitude desjenigen Musters wird ermittelt, welches der Anregungsintensität in dem räumlichen Bereich von Interesse entspricht;
   j) die solcherart bestimmte Amplitude wird als Maß für die Konzentration der Substanz in dem räumlichen Bereich von Interesse genommen; und
   k) der Anregungsstrahl wird solange räumlich geändert in das Objekt eingekoppelt, bis die räumliche Struktur von zumindest Teilen des Objekts bestimmt ist.

2. Verfahren nach dem vorhergehenden Anspruch,
   **dadurch gekennzeichnet,**
   **dass** die Substanz und der Anregungswellenlängenbereich derart aufeinander abgestimmt werden, dass die zeitlichen Transienten der Emission elektromagnetischer Strahlung nach einer Änderung der Intensität des Anregungsstrahls aufgrund von Triplett-Zustands-Photophysik von der jeweiligen Intensität des Anregungsstrahls abhängen.

3. Verfahren nach Anspruch 1,
**dadurch gekennzeichnet,**
**dass** als elektromagnetische Emission die Fluoreszenz gewählt wird; und
**dass** die Substanz und der Anregungswellenlängenbereich derart aufeinander abgestimmt werden, dass die zeitlichen Transienten der Emission elektromagnetischer Strahlung nach einer Änderung der Intensität des Anregungsstrahls aufgrund der Ausnutzung optischer Sättigung des angeregten Zustands von der jeweiligen Intensität des Anregungsstrahls abhängen.

4. Verfahren zum Bestimmen der räumlichen Struktur eines Objekts mittels Fluoreszenzmikroskopie mit folgenden Schritten:

a) das Objekt wird derart ausgewählt, dass es mindestens eine geeignete Substanz enthält, die durch elektromagnetische Strahlung zur Emission elektromagnetischer Strahlung angeregt werden kann, wobei die Verteilung dieser Substanz im Objekt nachgewiesen wird;
b) ein Anregungsstrahl wird in das Objekt eingekoppelt;
b1) mindestens ein zweiter Strahl wird derart in das Objekt eingekoppelt, dass sich räumliche Bereiche mit unterschiedlichen Intensitäten im Objekt ergeben;
c) der Wellenlängenbereich des Anregungsstrahls wird derart gewählt, dass der Anregungsstrahl die Substanz zur Emission anregen kann;
c1) der Wellenlängenbereich des zweiten Strahls wird derart gewählt, dass der zweite Strahl die Emission der Substanz beeinflussen kann;
d) die Intensität des Anregungsstrahls wird geändert, wodurch sich zeitliche Transienten der Emission elektromagnetischer Strahlung durch die Substanz ergeben;
e) die Substanz und die Wellenlängenbereiche der Strahlen werden derart aufeinander abgestimmt, dass die zeitlichen Transienten der Emission elektromagnetischer Strahlung durch die Substanz nach einer Änderung der Intensität des Anregungsstrahls von der jeweiligen Intensität des zweiten Strahls abhängen;
f) der zeitliche Verlauf der Transienten nach einer Änderung der Intensität des Anregungsstrahls wird gemessen;
g) unterschiedliche Muster für den zeitlichen Verlauf unterschiedlicher Transienten werden bestimmt;
h) die Muster werden mittels unterschiedlicher Amplituden an die gemessene Transiente der Emission angepasst;
i) die Amplitude desjenigen Musters wird ermittelt, welches der Intensität des zweiten Strahls in dem räumlichen Bereich von Interesse entspricht;
j) die solcherart bestimmte Amplitude wird als Maß für die Konzentration der Substanz in dem räumlichen Bereich von Interesse genommen; und
k) die Strahlen werden solange räumlich geändert in das Objekt eingekoppelt, bis die räumliche Struktur von zumindest Teilen des Objekts bestimmt ist.

5. Verfahren nach dem vorhergehenden Anspruch,
**dadurch gekennzeichnet,**

a) **dass** als Substanz mindestens ein Paar aus einem Fluorophor (Donor) und einem Quencher (Akzeptor) gewählt werden, welche Förster-Resonanz-Energie-Transfer (FRET) ausführen;
b) **dass** der Wellenlängenbereich des Anregungsstrahls derart gewählt wird, dass der Anregungsstrahl den Donor zur Emission anregen kann;
c) **dass** der Wellenlängenbereich des zweiten Strahls derart gewählt wird, dass der zweite Strahl den Akzeptor in das Niveau anregen kann, in das der Donor seine Energie abgibt.

6. Verfahren nach dem vorhergehenden Anspruch,
**dadurch gekennzeichnet,**
**dass** der Wellenlängenbereich des zweiten Strahls derart gewählt wird, dass der zweite Strahl eine stimulierte Emission der Substanz bewirken kann.

7. Verfahren nach einem der drei vorhergehenden Ansprüche,
**dadurch gekennzeichnet,**
**dass** der zweite Strahl mit konstanter Intensität eingestrahlt wird.

**8.** Verfahren nach einem der vorhergehenden Ansprüche,
**dadurch gekennzeichnet,**
**dass** die Anregung der Probe mittels elektromagnetischer Strahlung mittels eines 4Pi-Mikroskops erfolgt.

**9.** Vorrichtung zum Bestimmen der räumlichen Struktur eines Objekts mittels Fluoreszenzmikroskopie:

a) mit einer elektromagnetischen Strahlungsquelle zum Erzeugen eines Anregungsstrahls mit einem vorgegebenen Wellenlängenbereich;
b) mit Mitteln zum Einkoppeln des Anregungsstrahls in das Objekt derart, dass sich räumliche Bereiche mit unterschiedlichen Anregungsintensitäten im Objekt ergeben;
c) mit Mitteln zum Ändern der Intensität des Anregungsstrahls derart, dass sich ein zeitliches Rechteckmuster mit Einschaltperioden und Ausschaltperioden ergibt;
d) mit Mitteln zum Messen des zeitlichen Verlaufs (Transienten) der Emission elektromagnetischer Strahlung durch das Objekt während der Einschaltperiode;
e) mit Mitteln zum Bestimmen unterschiedlicher Muster für den zeitlichen Verlauf unterschiedlicher Transienten für einzelne Werte der Anregungsintensität;
f) mit Mitteln zum Anpassen der Muster mittels unterschiedlicher Amplituden an die gemessene Transiente der Emission;
g) mit Mitteln zum Bestimmen der Amplitude desjenigen Musters, welches der Anregungsintensität in dem räumlichen Bereich von Interesse entspricht;
h) mit Mitteln zum Auswählen der solcherart bestimmten Amplitude als Maß für die Konzentration der Substanz in dem räumlichen Bereich von Interesse; und
i) mit Mitteln zum räumlich geänderten Einkoppeln des Anregungsstrahls in das Objekt solange, bis die räumliche Struktur von zumindest Teilen des Objekts bestimmt ist.

**10.** Vorrichtung zum Bestimmen der räumlichen Struktur eines Objekts mittels Fluoreszenzmikroskopie:

a) mit einer elektromagnetischen Strahlungsquelle zum Erzeugen eines Anregungsstrahls mit einem vorgegebenen Wellenlängenbereich;
a1) mit einer zweiten elektromagnetischen Strahlungsquelle zum Erzeugen eines zweiten Strahls mit einem vorgegebenen Wellenlängenbereich;
b) mit Mitteln zum Einkoppeln des Anregungsstrahls in das Objekt;
b1) mit Mitteln zum Einkoppeln des zweiten Strahls in das Objekt derart, dass sich räumliche Bereiche mit unterschiedlichen Intensitäten im Objekt ergeben;
c) mit Mitteln zum Ändern der Intensität des Anregungsstrahls derart, dass sich ein zeitliches Rechteckmuster mit Einschaltperioden und Ausschaltperioden ergibt;d) mit Mitteln zum Messen des zeitlichen Verlaufs (Transienten) der Emission elektromagnetischer Strahlung durch das Objekt während der Einschaltperiode;
e) mit Mitteln zum Bestimmen unterschiedlicher Muster für den zeitlichen Verlauf unterschiedlicher Transienten;
f) mit Mitteln zum Anpassen der Muster mittels unterschiedlicher Amplituden an die gemessene Transiente der Emission;
g) mit Mitteln zum Bestimmen der Amplitude desjenigen Musters, welches der Intensität des zweiten Strahls in dem räumlichen Bereich von Interesse entspricht;
h) mit Mitteln zum Auswählen der solcherart bestimmten Amplitude als Maß für die Konzentration der Substanz in dem räumlichen Bereich von Interesse; und
i) mit Mitteln zum räumlich geänderten Einkoppeln der Strahlen in das Objekt solange, bis die räumliche Struktur von zumindest Teilen des Objekts bestimmt ist.

**Claims**

**1.** A method for determining the spatial structure of an object using fluorescence microscopy, having the following steps:

a) the object is selected in such a way that it contains at least one suitable substance that can be excited to emit electromagnetic radiation by electromagnetic radiation, the distribution of this substance in the object being detected;
b) an excitation beam is coupled into the object in such a way as to yield spatial regions of different intensities of the excitation in the object;
c) the wavelength range of the excitation beam is selected in such a way that the excitation beam can excite

EP 1 875 293 B1

the substance to emit;

d) the intensity of the excitation beam is changed so as to yield temporal transients of the emission of electromagnetic radiation by the substance;

e) the substance and the wavelength range of the excitation are matched in such a way that after a change in the intensity of the excitation beam the temporal transients of the emission of electromagnetic radiation are a function of the respective intensity of the excitation beam;

f) the time profile of the transients is measured after a change in the intensity of the excitation beam;

g) different patterns for the time profile of different transients are determined for individual values of the excitation intensity;

h) the patterns are adapted to the measured transient of the emission by means of different amplitudes;

i) the amplitude is determined of that pattern which corresponds to the excitation intensity in the spatial region of interest;

j) the amplitude determined in such a way is taken as a measure of the concentration of the substance in the spatial region of interest; and

k) the excitation beam is coupled into the object in a spatially changed fashion until the spatial structure of at least parts of the object is determined.

2. The method as claimed in the preceding claim, **characterized in that** the substance and the wavelength range of the excitation are matched in such a way that after a change in the intensity of the excitation beam on the basis of triplet state photophysics the temporal transients of the emission of electromagnetic radiation are a function of the respective intensity of the excitation beam.

3. The method as claimed in claim 1, **characterized in that** fluorescence is selected as electromagnetic emission; and **in that** the substance and the wavelength range of the excitation are matched in such a way that after a change in the intensity of the excitation beam on the basis of the use of optical saturation of the excited state the temporal transients of the emission of electromagnetic radiation are a function of the respective intensity of the excitation beam.

4. A method for determining the spatial structure of an object using fluorescence microscopy, having the following steps:

a) the object is selected in such a way that it contains at least one suitable substance that can be excited to emit electromagnetic radiation by electromagnetic radiation, the distribution of this substance in the object being detected;

b) an excitation beam is coupled into the object;

b1) at least one second beam is coupled into the object in such a way as to yield spatial regions of different intensities of the second beam in the object;

c) the wavelength range of the excitation beam is selected in such a way that the excitation beam can excite the substance to emit;

c1) the wavelength range of the second beam is selected in such a way that the second beam can influence the emission of the substance;

d) the intensity of the excitation beam is changed so as to yield temporal transients of the emission of electromagnetic radiation by the substance;

e) the substance and the wavelength ranges of the beams are matched in such a way that after a change in the intensity of the excitation beam the temporal transients of the emission of electromagnetic radiation by the substance are a function of the respective intensity of the second beam;

f) the time profile of the transients is measured after a change in the intensity of the excitation beam;

g) different patterns for the time profile of different transients are determined;

h) the patterns are adapted to the measured transient of the emission by means of different amplitudes;

i) the amplitude is determined of that pattern which corresponds to the intensity of the second beam in the spatial region of interest;

j) the amplitude determined in such a way is taken as a measure of the concentration of the substance in the spatial region of interest; and

k) the beams are coupled into the object in a spatially changed fashion until the spatial structure of at least parts of the object is determined.

5. The method as claimed in the preceding claim,
**characterized**

a) **in that** the substance selected is at least a pair consisting of a fluorophor (donor) and a quencher (acceptor)

18

that execute Förster resonance energy transfer (FRET);

b) **in that** the wavelength range of the excitation beam is selected in such a way that the excitation beam can excite the donor to emit; and

c) **in that** the wavelength range of the second beam is selected in such a way that the second beam can excite the acceptor into the level at which the donor outputs its energy.

6. The method as claimed in the preceding claim, **characterized in that** the wavelength range of the second beam is selected in such a way that the second beam can effect a simulated emission of the substance.

7. The method as claimed in one of the three preceding claims, **characterized in that** the second beam is irradiated at constant intensity.

8. The method as claimed in one of the preceding claims, **characterized in that** the excitation of the sample by means of electromagnetic radiation is performed by means of a 4Pi microscope.

9. An apparatus for determining the spatial structure of an object using fluorescence microscopy:

   a) having an electromagnetic radiation source for generating an excitation beam with a prescribed wavelength range;

   b) having means for coupling the excitation beam into the object in such a way as to yield spatial regions of different intensities of the excitation in the object;

   c) having means for changing the intensity of the excitation beam in such a way as to yield a temporal rectangular pattern having on periods and off periods;

   d) having means for measuring the time profile (transients) of the emission of the electromagnetic radiation by the object during the on periods;

   e) having means for determining different patterns for the time profile of different transients for individual values of the excitation intensity;

   f) having means for adapting the pattern to the measured transient of the emission by means of different amplitudes;

   g) having means for determining the amplitude of that pattern which corresponds to the excitation intensity in the spatial region of interest;

   h) having means for selecting the amplitude determined in such a way as the measure of the concentration of the substance in the spatial region of interest; and

   i) having means for coupling the excitation beam into the object in a spatially changed fashion until the spatial structure of at least parts of the object is determined.

10. Device for determining the spatial structure of an object using fluorescence microscopy:

    a) having an electromagnetic radiation source for generating an excitation means with a prescribed wavelength range;

    a1) having a second electromagnetic radiation source for generating a second beam with a described wavelength range;

    b) having means for coupling the excitation beam into the object;

    b1) having means for coupling the second beam into the object in such a way as to yield spatial regions of different intensities in the object;

    c) having means for changing the intensity of the excitation beam in such a way as to yield a temporal rectangular pattern having on periods and off periods;

    d) having means for measuring the time profile (transients) of the emission of the electromagnetic radiation by the object during the on periods;

    e) having means for determining different patterns for the time profile of different transients;

    f) having means for adapting the pattern to the measured transient of the emission by means of different amplitudes;

    g) having means for determining the amplitude of that pattern which corresponds to the intensity of the second beam in the spatial region of interest;

    h) having means for selecting the amplitude determined in such a way as the measure of the concentration of the substance in the spatial region of interest; and

    i) having means for coupling the beams into the object in a spatially changed fashion until the spatial structure of at least parts of the object is determined.

**Revendications**

1. Procédé de détermination de la structure spatiale d'un objet par microscopie en fluorescence, ledit procédé présentant les étapes suivantes :

   a) l'objet est sélectionné de telle façon, qu'il contient au moins une substance qu'un rayonnement électromagnétique peut exciter à émettre un rayonnement électromagnétique, la répartition de cette substance étant détectée dans l'objet,

   b) un faisceau d'excitation est injecté dans l'objet de manière à obtenir dans l'objet des zones spatiales qui présentent différentes intensités d'excitation,

   c) la région de longueurs d'onde du faisceau d'excitation est sélectionnée de telle façon qu'elle permet au faisceau d'excitation d'exciter la substance de manière à ce qu'elle produise une émission,

   d) l'intensité du faisceau d'excitation est modifiée, ce qui fournit des transitoires temporels du rayonnement électromagnétique émis par la substance,

   e) la substance et la région de longueurs d'onde d'excitation sont coordonnées de telle sorte que les transitoires temporels du rayonnement électromagnétique émis après une modification de l'intensité du faisceau d'excitation dépendent de l'intensité particulière du faisceau d'excitation,

   f) l'évolution temporelle des transitoires après une modification de l'intensité du faisceau d'excitation est mesurée,

   g) différents motifs d'évolution temporelle de différents transitoires sont déterminés pour des valeurs particulières de l'intensité d'excitation,

   h) les motifs sont adaptés au moyen de différentes amplitudes aux transitoires de l'émission que l'on a mesurés,

   i) l'amplitude du motif qui correspond à l'intensité d'excitation dans la zone spatiale étudiée est déterminée,

   j) l'amplitude ainsi déterminée est utilisée comme mesure de la concentration de la substance dans la zone spatiale étudiée, et

   k) le faisceau d'excitation est injecté en différents emplacements de l'objet jusqu'à ce que la structure spatiale d'au moins certaines parties de l'objet ait été déterminée.

2. Procédé selon la revendication précédente, **caractérisé en ce que** la substance et la région de longueurs d'onde d'excitation sont accordées l'une à l'autre de telle sorte que les transitoires temporels du rayonnement électromagnétique émis après une modification de l'intensité du faisceau d'excitation dépendent de l'intensité particulière du faisceau appliqué sur la base de la photophysique de l'état triplet.

3. Procédé selon la revendication 1, **caractérisé en ce que** comme émission électromagnétique, on sélectionne la fluorescence et **en ce que** la substance et la région de longueurs d'onde d'excitation sont accordées l'une à l'autre de telle sorte que les transitoires temporels du rayonnement électromagnétique émis après une modification de l'intensité du faisceau d'excitation dépendent de l'intensité particulière du faisceau d'excitation en fonction de l'utilisation de la saturation optique à l'état excité.

4. Procédé de détermination de la structure spatiale d'un objet par microscopie en fluorescence, qui présente les étapes suivantes :

   a) l'objet est sélectionné telle façon, qu'il contient au moins une substance qu'un rayonnement électromagnétique peut exciter à émettre un rayonnement électromagnétique, la répartition de cette substance étant détectée dans l'objet,

   b) un faisceau d'excitation est injecté dans l'objet,

   b1) au moins un deuxième faisceau est injecté dans l'objet de manière à obtenir dans l'objet des zones spatiales qui présentent différentes intensités,

   c) la région de longueurs d'onde du faisceau d'excitation est sélectionnée de telle façon qu'elle permet au faisceau d'excitation d'exciter la substance de manière à ce qu'elle produise une émission,

   c1) la région de longueurs d'onde du deuxième faisceau est sélectionnée de telle sorte que le deuxième faisceau puisse influencer l'émission par la substance,

   d) l'intensité du faisceau d'excitation est modifiée, ce qui fournit des transitoires temporels du rayonnement électromagnétique émis par la substance,

   e) la substance et la région de longueurs d'onde d'excitation sont coordonnées de telle sorte que les transitoires temporels du rayonnement électromagnétique émis après une modification de l'intensité du faisceau d'excitation dépendent de l'intensité particulière du faisceau d'excitation,

   f) l'évolution temporelle des transitoires après une modification de l'intensité du faisceau d'excitation est mesurée,

g) différents motifs d'évolution temporelle de différents transitoires sont déterminés pour des valeurs particulières de l'intensité d'excitation,

h) les motifs sont adaptés au moyen de différentes amplitudes aux transitoires de l'émission que l'on a mesurés,

i) l'amplitude du motif qui correspond à l'intensité d'excitation dans la zone spatiale étudiée est déterminée,

j) l'amplitude ainsi déterminée est utilisée comme mesure de la concentration de la substance dans la zone spatiale étudiée, et

k) le faisceau d'excitation est injecté dans l'objet en étant modifié spatialement jusqu'à ce que la structure spatiale d'au moins certaines parties de l'objet ait été déterminée.

5. Procédé selon la revendication précédente, **caractérisé en ce que**,

a) comme substance, on sélectionne au moins une paire constituée d'un fluorophore (donneur) et d'un extincteur (accepteur) qui exécutent un transfert d'énergie de résonance de Förster (FRET),

b) **en ce que** la région de longueurs d'onde du faisceau d'excitation est sélectionnée de telle sorte que le faisceau d'excitation puisse exciter le donneur de manière à ce qu'il produise une émission,

c) **en ce que** la région de longueurs d'onde du deuxième faisceau est sélectionnée de telle sorte que le deuxième faisceau puisse exciter l'accepteur au niveau auquel le donneur délivre son énergie.

6. Procédé selon la revendication précédente, **caractérisé en ce que** la région sélectionnée de longueurs d'onde du deuxième faisceau permet au deuxième faisceau de stimuler la substance de manière à ce qu'elle produise une émission.

7. Procédé selon l'une des trois revendications précédentes, **caractérisé en ce que** le deuxième faisceau est injecté à intensité constante.

8. Procédé selon l'une des revendications précédentes, **caractérisé en ce que** l'excitation de l'échantillon au moyen d'un rayonnement électromagnétique s'effectue au moyen d'un microscope 4Pi.

9. Dispositif de détermination de la structure spatiale d'un objet par microscopie en fluorescence, ledit dispositif présentant :

a) une source de rayonnement électromagnétique qui crée un faisceau d'excitation dans une région de longueurs d'onde prédéterminée,

b) des moyens d'injection du faisceau d'excitation dans l'objet de manière à obtenir dans l'objet des zones spatiales qui présentent différentes intensités d'excitation,

c) des moyens de modification de l'intensité du faisceau d'excitation, de telle sorte que l'on obtienne un motif temporel rectangulaire qui présente des périodes de branchement et des périodes de débranchement,

d) des moyens de mesure de l'évolution temporelle (transitoires) du rayonnement électromagnétique émis par l'objet pendant la période de branchement,

e) des moyens de détermination de différents motifs de l'évolution temporelle de différents transitoires pour différentes valeurs de l'intensité d'excitation,

f) des moyens d'adaptation du motif au moyen de différentes amplitudes aux transitoires mesurés de l'émission,

g) des moyens de détermination de l'amplitude du motif qui correspond à l'intensité d'excitation dans la zone spatiale étudiée,

h) des moyens de sélection de l'amplitude ainsi déterminée comme mesure de la concentration de la substance dans la zone spatiale étudiée, et

i) des moyens d'injection du faisceau d'excitation en différents emplacements de l'objet jusqu'à ce que la structure spatiale d'au moins certaines parties de l'objet ait été déterminée.

10. Dispositif de détermination de la structure spatiale d'un objet par microscopie en fluorescence qui présente :

a) une source de rayonnement électromagnétique qui crée un faisceau d'excitation dans une région de longueurs d'onde prédéterminée,

a1) une deuxième source de rayonnement électromagnétique qui forme un deuxième faisceau dans une région de longueurs d'onde prédéterminée,

b) des moyens d'injection du faisceau d'excitation dans l'objet,

b1) des moyens d'injection du deuxième faisceau dans l'objet de telle sorte que l'on obtienne dans l'objet des zones spatiales à intensités différentes,

c) des moyens de modification de l'intensité du faisceau d'excitation, de telle sorte que l'on obtienne un motif temporel rectangulaire qui présente des périodes de branchement et des périodes de débranchement,

d) des moyens de mesure de l'évolution temporelle (transitoires) du rayonnement électromagnétique émis par l'objet pendant la période de branchement,

e) des moyens de détermination de différents motifs de l'évolution temporelle de différents transitoires,

f) des moyens d'adaptation des motifs au moyen de différentes amplitudes aux transitoires mesurés de l'émission,

g) des moyens de détermination de l'amplitude du motif qui correspond à l'intensité d'excitation dans la zone spatiale étudiée,

h) des moyens de sélection de l'amplitude ainsi déterminée comme mesure de la concentration de la substance dans la zone spatiale étudiée, et

i) des moyens d'injection du faisceau d'excitation en différents emplacements de l'objet jusqu'à ce que la structure spatiale d'au moins certaines parties de l'objet ait été déterminée.

Fig. 1

Fig. 2A

Fig. 2B

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9823941 A2

**In der Beschreibung aufgeführte Nicht-Patentliteratur**

- **S. W. HELL ; H. K. STELZER.** *J. Opt. Soc. Am. A,* 1992, vol. 9, 2159
- **S.W. HELL.** Topics in Fluorescence Spectroscopy. Plenum Press, 1997, 361-422
- **M.G.L. GUSTAFSSON.** *Curr. Opin. Struct. Biol.,* 1999, vol. 9, 627
- **SCHÖNLE A et al.** FOUR-DIMENSIONAL MULTI-PHOTON MICROSCOPY WITH TIME-CORRELATED SINGLE-PHOTON COUNTING. *APPLIED OPTICS, OSA, OPTICAL SOCIETY OF AMERICA,* 01. Dezember 2000, vol. 39 (34), 6306-6311
- **BECKER W et al.** High resolution TCSPC lifetime imaging. *MULTIPHOTON MICROSCOPY IN THE BIOMEDICAL SCIENCES III,* 26. Januar 2003, vol. 4963 (1), 175-184
- Far-field fluorescence microscopy with repetitive excitation. **SCHÖNLE A et al.** European Physical Journal DEDP Sciences. Springer-Verlag, Juli 1999, vol. 6, 283-290
- **SCHÖNLE, A. ; HELL, S.W.** Far-field fluorescence microscopy with repetitive excitation. *Eur. Phys. J. D,* 1999, vol. 6, 283-290
- **S.W. HELL ; H.K. STELZER.** *J. Opt. Soc. Am. A,* 1992, vol. 9, 2159
- **M.G.L. GUSTAFSSON.** *J. Microsc.,* 2000, vol. 198, 82
- **W. DENK ; J.H. STRICKLER ; W.W. WEBB.** *Science,* 1990, vol. 248, 73
- **S.W. HELL ; M. DYBA ; S. JAKOBS.** *Curr. Opin. Neurobiol.,* 2004, vol. 14, 1
- **B. RICHARDS ; E. WOLF.** *Proc. Roy. Soc. London,* 1959, vol. A 253, 358
- **A. SCHÖNLE ; S.W. HELL.** Far-field fluorescence microscopy with repetitive excitation. *Eur. Phys. J. D,* 1999, vol. 6, 283-290